# FASCICULE DE BREVET EUROPEEN

(11) **EP 1 151 973 B1**
(45) Date de publication et mention de la délivrance du brevet: **08.01.2003**
(21) Numéro de dépôt: 01490016.1
(22) Date de dépôt: 03.05.2001
(51) Int. Cl.: C04B 26/14, C04B 18/16, E04F 15/12

(54) **Procédé de réalisation s'un sol industriel, moyens pour la mise en oeuvre du procédé et sol ainsi obtenu**
Verfahren zur Herstellung eines Industriebodens, Mittel zur Durchführung des Verfahrens und so erhaltener Boden
Construction method for an industrial floor, means for implementing this method and floors thus obtained

(30) Priorité: 05.05.2000 FR 0005766
(43) Date de publication de la demande: 07.11.2001
(73) Titulaire: Robaey, Jacques, 59210 Coudekerque Branche (FR)
(72) Inventeur: Robaey, Jacques, 59210 Coudekerque Branche (FR)
(74) Mandataire: Hénnion, Jean-Claude

(56) Documents cités:
- BE-A- 533 283
- FR-A- 2 126 538
- DATABASE WPI Week 199610 Derwent Publications Ltd., London, GB; AN 1996-095131 XP002157757 & JP 08 004267 A (INAX KK) & PATENT ABSTRACTS OF JAPAN vol. 199, no. 605, 31 mai 1996 (1996-05-31) & JP 08 004267 A (INAX KK), 9 janvier 1996 (1996-01-09)
- DATABASE WPI Week 199626 Derwent Publications Ltd., London, GB; AN 1996-258078 XP002157758 & RU 2 046 904 C (BRAILOVSKII)
- DATABASE WPI Week 198639 Derwent Publications Ltd., London, GB; AN 1986-255552 XP002157759 & JP 61 183559 A (KAJIMA CORP)

## Description

L'invention se rapporte à un procédé de réalisation d'un sol industriel.

Elle se rapporte également aux moyens pour la mise en oeuvre du procédé et au sol obtenu.

Par sol industriel, on comprendra un sol dont la face supérieure est revêtue d'un matériau dur en opposition à un revêtement du type moquette ou film multicouche plastifié.

Ces sols sont, à ce jour, obtenus par fixation sur une chape de béton de carreaux disposés cote à cote et entre lesquels carreaux sont formés des joints.

Notamment, dans l'industrie agroalimentaire ou: chimique, on utilise préférentiellement des carreaux en grès cérame pour faciliter le nettoyage et en raison notamment de l'imperméabilité de ces carreaux.

Les carreaux de grès cérame sont obtenus par vitrification à une température de 1200° Celsius d'un mélange de produits naturels, tels que l'argile blanche, le quartz, le feldspath de sodium et potassium préalablement réduits en poudre.

La cuisson de ce mélange est une phase importante pour obtenir un matériau de qualité.

Ces sols carrelés en grès cérame présentent des avantages par rapport à d'autre matériaux mais on constate différents problèmes.

Dans ces milieux industriels, il n'est pas rare qu'un objet lourd tombe sur le carrelage et casse un carreau ce qui oblige à le remplacer très rapidement pour éviter que ne s'accumulent des bactéries dans les fentes du carreau cassé.

Un autre problème résulte d'une usure plus précoce des joints malgré d'énormes progrès réalisés dans la composition des dits joints.

Cette dégradation des joints se traduit par des creux plus profonds dans lesquels s'accumulent plus rapidement la poussière ou des bactéries.

On peut utiliser des carreaux de plus grandes dimensions pour limiter le nombre de joints mais, à partir d'une certaine taille de ces carreaux, il devient impossible de les manipuler.

Il est connu (FR-A2126538) de réaliser des carreaux à l'aide d'un mélange d'agglomérats avec une résine époxy mais la transposition à des surfaces plus étendues s'est heurtée à notamment un problème de retrait.

L'invention se propose de remédier aux inconvénients précités.

A cet effet, l'invention a pour objet un procédé de réalisation d'un sol industriel sur une chape en béton caractérisé en ce que :
- on concasse des carreaux de grès cérame pleine masse,
- on retient les granulats compris entre deux et quatre millimètres,
- on lave les granulats retenus,
- on réalise une composition de revêtement comprenant en poids
   . 65 %de granulats secs de grès cérame;
   . 33% de résine époxydique y compris son durcisseur et
   . 2% d'un liant plastifiant et fluidifiant,
- on couvre la surface supérieure de la chape en béton d'un primaire d'accrochage et
- on coule sur la surface revêtue du primaire d'accrochage, la composition de revêtement de manière à obtenir un revêtement en grès cérame d'épaisseur d'au moins six millimètres et de surface maximale autorisée sans joint.

L'invention a également pour objet les moyens pour la mise en oeuvre du procédé et le sol obtenu.

L'invention sera bien comprise à l'aide de la description ci après faite à titre d'exemple non limitatif en regard du dessin ci-annexé qui représente schématiquement :

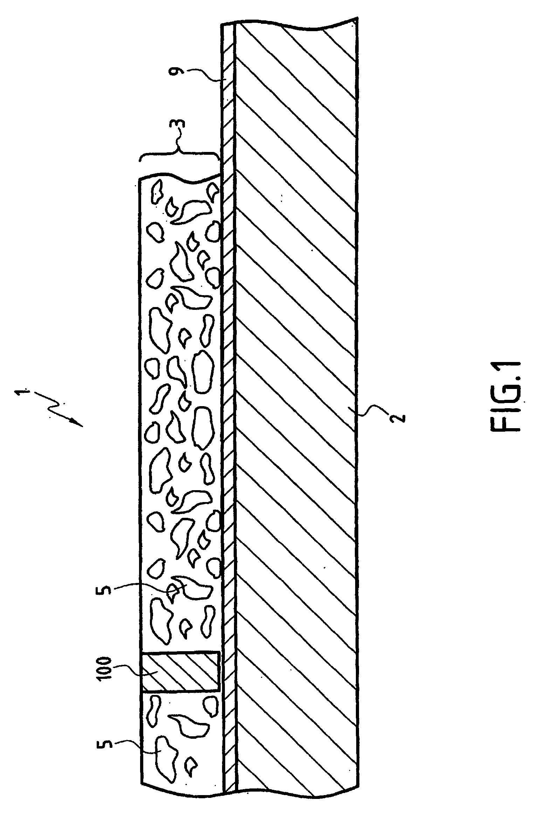

- figure 1 : vue en coupe d'un sol industriel,
- figure 2 : le procédé de préparation de la composition de grès cérame.

En se reportant au dessin, on voit un sol 1 vu en coupe.

Le sol comprend classiquement une chape 2 de béton constituant l'assise pour le revêtement 3 supérieur.

Cette chape béton est conforme aux normes en vigueur, c'est à dire qu'elle est saine, propre, sèche et sans fissure.

Selon une caractéristique du procédé :
- on concasse des carreaux 4 de grès cérame pleine masse,
- on retient les granulats 5 compris entre deux et quatre millimètres,
- on lave les granulats retenus,
- on réalise une composition 6 de revêtement comprenant en poids :
   . 65 % de granulats 5 secs de grès cérame,
   . 33% de résine 7 époxydique y compris son durcisseur 10 et
   . 2% d'un liant 8 plastifiant et fluidifiant
- on couvre la surface supérieure de la chape en béton d'un primaire 9 d'accrochage et
- on coule sur la surface revêtue du primaire d'accrochage, la composition 6 de revêtement de manière à obtenir un revêtement 3 en grès cérame d'épaisseur d'au moins six millimètres et de surface maximale autorisée sans joint.

Le liant 8 utilisé est du lignosulfate modifié.

Pour obtenir le mélange à couler, on mélange le granulat 5 avec la résine 7 époxy et son durcisseur 10, on ajoute le liant 8 et on malaxe le tout au moins cinq minutes à une température d'au moins 15° Celsius jusqu'à consistance d'une. pâte homogène.

On étale la pâte homogène à l'aide, par exemple, d'une taloche.

La résine 7 époxy est un produit à réaction bisphénol A épichlorhydrine avec un poids moléculaire inférieur ou égal à 700 contenant de l'hexandioldiglycidyléther et du diisopropyl naphtalène isomère.

Le durcisseur 10 est une composition d'alcool benzylique, d'isopharondiamine, de M-xylenédianrine, de diéthylène triamine,de benzyldiméthylamine, de nonylephénol et de triethylenetetramine.

Le granulat doit provenir de grès cérame d'excellente qualité et non pas des rebuts car ces rebuts ne présenteraient pas les qualités mécaniques et chimiques nécessaire à la résistance souhaitée tant mécanique que chimique du sol coulé in situ.

Il doit s'agir de grès cérame pleine masse, c'est à dire ayant la même composition dans son épaisseur.

Le liant participe à la suppression de l'effet de retrait ce qui est un aspect très important pour l'invention. Bien évidemment, il subsiste un léger retrait mais qui est inférieur à 0,01% ce qui est extrêmement faible.

En effet, le but est de supprimer notamment les joints pour éviter l'accumulation de bactéries.

Par conséquent, la dalle en grès cérame coulée ne subissant pas, au cours de son séchage, un retrait, il n'y a pas création de fentes.

La dalle en grès doit être imperméable car elle est notamment destinée à l'agroalimentaire et il serait inapproprié que le sol puisse retenir des bactéries.

On note que la charge en granulats de grès cérame est importante de sorte que la dalle obtenue présente des propriétés mécaniques très importantes.

En effet, même si un objet lourd tombe sur la dalle, la résine encaisse et évite la propagation de l'onde de choc de sorte que la dalle reste quasi intacte.

Le poids spécifique de la dalle sans joint obtenue est de l'ordre de 1,5 kg/dm3

L'adhérence est de l'ordre de 80kg/cm2, la résistance à la traction de 150kg/cm2, la résistance à la compression de 450kg/cm2.

La compressibilité à 300kg/cm2 est de l'ordre de 3%.

Comme indiqué plus haut lorsque la surface à recouvrir est supérieure à une surface prédéterminée de l'ordre de trente mètres carré en France, la législation impose un fractionnement des surfaces.

Dans ce cas là, avant de couler la composition, on fractionne la surface à l'aide de profilés 100 en acier inoxydable puis on procède à l'opération de coulage après avoir posé le primaire d'accrochage.

Le primaire 9 d'accrochage sera composé d'une résine et d'un durcisseur choisi pour que ce primaire reste visqueux environ huit heures.

On utilise la même résine que celle précitée avec un durcisseur différent.

Ce durcisseur pour le primaire d'accrochage se compose d'alcool benzylique, de 3-diméthylamino-propylamine et de 2-4-6-tri(diméthylaminométhyl)phénol.

On obtient ainsi un carrelage sans joint et antiacide.

En effet, le grès cérame résiste aux acides et la résine qui immobilise les granulats est également résistante aux acides.

Le temps de séchage du revêtement coulé est de l'ordre d'une semaine.

Lorsque le revêtement est sec, il est antidérapant. Il peut être poncé selon la finition souhaitée.

Le choix de la granulométrie a été déterminé en fonction de l'épaisseur du revêtement qui est de six millimètres.

On obtient une répartition homogène et tous les granulats sont enrobés de résine et il n'y pas d'effet de migration lors du séchage qui pourrait conduire à la création de strates.

Les moyens pour la mise en oeuvre du procédé comprennent donc un mélange 6 de granulats 5 de grès cérame pleine masse de granulométrie compris entre deux et quatre millimètres comprenant en poids
- 65 % de granulats 5 secs de grès cérame,
- 33% de résine 7 époxydique y compris son durcisseur 10 et
- 2% d'un liant 8 plastifiant et fluidifiant.

Comme indiqué plus haut, le liant est un lignosulfate.

Les valeurs de granulats secs et de résine sont données à plus ou moins 2%.

Si on augmente la quantité de résine, on augmente nécessairement le retrait ce qui est incompatible avec le résultat recherché.

Par exemple, pour réaliser un m2 de dalles, il faut 7kg de granulats secs, 3,5kg de résine époxydiques avec son durcisseur et 200g d'un liant plastifiant.

Ce type de revêtement trouvera son application dans de nombreux domaines tels que l'industrie agroalimentaire, les hôpitaux, les cuisines etc...

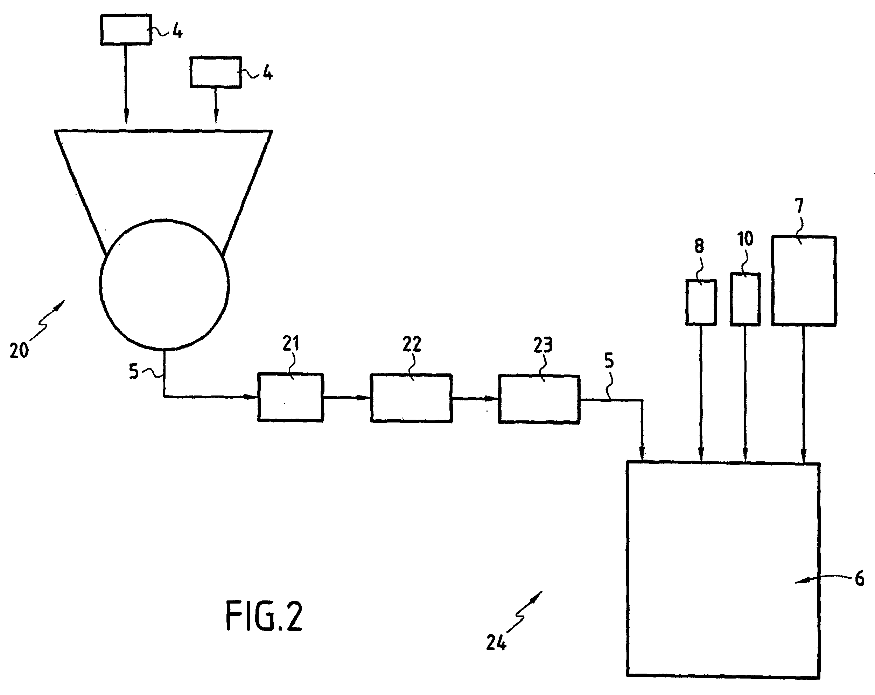

En figure 2, on a représenté l'étape 20 de concassage, les deux étapes 21, 22 de tamissage, l'étape 23 de lavage et l'étape 24 de mélange.

## Revendications

1. Procédé de réalisation d'un sol industriel comprenant une chape (2) de béton constituant l'assise pour un revêtement (3) supérieur contenant du grès cérame et une résine **CARACTERISE en ce que** :
- on concasse des carreaux (4) de grès cérame pleine masse,
- on retient les granulats (5) compris entre deux et quatre millimètres,
- on lave les granulats retenus,
- on réalise une composition (6) de revêtement comprenant en poids :
. 65 % de granulats (5) secs de grès cérame,
. 33% de résine (7) époxydique y compris son durcisseur (10) et
. 2% d'un liant (8) plastifiant et fluidifiant,
- on couvre la surface supérieure de la chape en béton d'un primaire (9) d'accrochage et
- on coule sur la surface revêtue du primaire d'accrochage, la composition (6) de revêtement de manière à obtenir un revêtement (3) en grès cérame d'épaisseur d'au moins six millimètres et de surface maximale autorisée sans joint.

2. Procédé selon la revendication 1 **caractérisé en ce que** le liant (8) utilisé est du lignosulfate modifié.

3. Procédé selon la revendication 1 **caractérisé en ce qu'**on mélange le granulat (5) avec la résine (7) époxy et son durcisseur (10), on ajoute le liant (8) et on malaxe le tout au moins cinq minutes à une température d'au moins 15° Celsius jusqu'à consistance d'une pâte homogène.

4. Procédé selon la revendication 1 **caractérisé en ce que** le temps de séchage du revêtement coulé est de l'ordre d'une semaine.

5. Procédé selon la revendication 1 **caractérisé en ce que**, lorsque la surface à recouvrir est supérieure à une surface prédéterminée avant de couler la composition, on fractionne la surface à l'aide de profilés en acier inoxydable puis on procède à l'opération de coulage de la composition (6) après avoir posé le primaire d'accrochage.

6. Moyens pour la mise en oeuvre du procédé selon l'une quelconque des revendications 1 à 5 **caractérisés en ce qu'**ils comprennent un mélange comprenant en poids :
- 65 % de granulats (5) secs de grès cérame compris entre deux et quatre millimètres,
- 33% de résine (7) époxydique y compris son durcisseur (10) et
- 2% d'un liant (8) plastifiant et fluidifiant.

7. Moyens selon la revendication 6 **caractérisés en ce que** le liant est un lignosulfate modifié.

8. Moyens selon la revendication 6 **caractérisés en ce que** la résine (7) époxy est un produit à réaction bisphénol A épichlorhydrine avec un poids moléculaire inférieur ou égal à 700 contenant de l'hexandioldiglycidyléther et du diisopropyl naphtalène isomère.

9. Moyens selon la revendication 6 **caractérisés en ce que** le primaire (9) d'accrochage est composé d'une résine et d'un durcisseur choisi pour que ce primaire reste visqueux environ huit heures.

10. Sol industriel **caractérisé en ce qu'**il est obtenu à l'aide du procédé selon l'une quelconque des revendications 1 à 5 et qu'il présente les caractéristiques physiques suivantes :
- le poids spécifique de la dalle sans joint obtenue est de l'ordre de 1,5 kg/dm3,
- l'adhérence est de l'ordre de 80kg/cm2, la résistance à la traction de 150kg/cm2, la résistance à la compression de 450kg/cm2,
- la compressibilité à 300kg/cm2 est de l'ordre de 3%.

## Claims

1. A method of constructing an industrial floor comprising a layer (2) of concrete forming the foundation for an upper coating (3) containing stoneware and a resin, **characterised in that**:
- stoneware tiles (4) are crushed in bulk,
- the aggregates (5) within the range two to four millimetres are retained,
- the retained aggregates are washed,
- a coating composition (6) is prepared, comprising by weight:
• 65% stoneware dry aggregates (5),
• 33% epoxy resin (7) including its hardening agent (10), and
• 2% of a plasticising and liquefying binder (8),
- the upper surface of the concrete layer is covered with a bonding primer (9), and
- the coating composition (6) is poured over the surface coated with the bonding primer, in such a manner as to obtain a coating (3) of stoneware which is at least six millimetres thick and of maximum admissible continuous surface area.

2. A method according to Claim 1, **characterised in that** the binder (8) used is modified lignosulphate.

3. A method according to Claim 1, **characterised in that** the aggregate (5) is mixed with the epoxy resin (7) and its hardening agent (10), the binder (8) is added, and the whole is milled for at least five minutes at a temperature of at least 15 °C until it has the consistency of a homogenous paste.

4. A method according to Claim 1, **characterised in that** the drying time of the poured coating is of the order of one week.

5. A method according to Claim 1, **characterised in that**, when the area to be covered is larger than a predetermined area before pouring the composition, the area is divided up with the aid of stainless steel bars and the process of pouring the composition (6) is then undertaken after laying the bonding primer.

6. Means of implementing the method according to any one of Claims 1 to 5, **characterised in that** they involve a mixture comprising by weight:
• 65% stoneware dry aggregates (5) within the range two to four millimetres,
• 33% epoxy resin (7) including its hardening agent (10), and
• 2% of a plasticising and liquefying binder (8).

7. Means according to Claim 6, **characterised in that** the binder is a modified lignosulphate.

8. Means according to Claim 6, **characterised in that** the epoxy resin (7) is a bisphenol A epichlorohydrin reaction product with a molecular weight of less than or equal to 700 containing hexanediol diglycidyl ether and diisopropyl naphthalene isomer.

9. Means according to Claim 6 **characterised in that** the bonding primer (9) is composed of a resin and a hardening agent chosen for the fact that the primer remains viscous for about eight hours.

10. An industrial floor, **characterised in that** it is produced with the aid of the method according to any one of Claims 1 to 5 and **in that** it has the following physical characteristics:
- the specific gravity of the continuous slab is of the order of 1.5 kg/dm³,
- the adherence is of the order of 80 kg/cm², the traction resistance 150 kg/cm², and the compressive resistance 450 kg/cm²,
- the compressibility at 300 kg/cm² is of the order of 3%.

## Patentansprüche

1. Verfahren zur Herstellung eines Industriebodens, welches einen Betonestrich (2) umfasst, der als Auflage für eine obere Beschichtung (3) bildet, die Steingut und einen Kunststoff enthält, **dadurch GEKENNZEICHNET, dass**:
- Steinplatten (4) aus Steingut in voller Masse grob zerkleinert werden,
- dass die Granulate (5) im Bereich zwischen zwei und vier Millimetern zurückgehalten werden,
- dass die zurückgehaltenen Granulate gewaschen werden,
- dass eine Zusammensetzung (6) zur Beschichtung hergestellt wird, welche, bezogen auf das Gewicht, folgendes enthält:
. 65 % trockene Granulate (5) aus Steingut,
. 33 % epoxidhaltiges Kunstharz (7) einschließlich seines Härters (10), und
. 2 % eines plastifizierenden und verflüssigenden Bindemittels (8),
- dass die Oberfläche des Betonestrichs mit einer Haftgrundierung (9) überzogen wird, und
- dass auf die mit der Haftgrundierung überzogene Oberfläche die Zusammensetzung (6) zur Beschichtung in der Weise gegossen wird, dass man eine Beschichtung (3) aus Steingut mit einer Stärke von mindestens sechs Millimetern und mit größtmöglicher fugenlos zulässiger Fläche erhält.

2. Verfahren nach Anspruch 1, **dadurch gekennzeichnet, dass** das verwendete Bindemittel (8) modifiziertes Lignosulfat ist.

3. Verfahren nach Anspruch 1, **dadurch gekennzeichnet, dass** das Granulat (5) mit dem Epoxidharz (7) und dessen Härter (10) vermischt wird, dass das Bindemittel (8) zugesetzt wird und dass das Ganze mindestens fünf Minuten lang bei einer Temperatur von mindestens 15 °C bis zur Konsistenz einer homogenen Masse unter Kneten durchgearbeitet wird.

4. Verfahren nach Anspruch 3, **dadurch gekennzeichnet, dass** die zum Trocknen der aufgegossenen Beschichtung benötigte Zeit in der Größenordnung von einer Woche liegt.

5. Verfahren zum nach Anspruch 4, **dadurch gekennzeichnet, dass** dann, wenn die zu überziehende Fläche größer als eine Fläche ist, die vor dem Vergießen der Zusammensetzung vorgegeben wurde, die Fläche mit Hilfe von Profilen aus Edelstahl unterteilt wird und dann nach dem Auftragen der Haftgrundierung der Arbeitsgang zum Vergießen der Zusammensetzung (6) vorgenommen wird.

6. Mittel zur Durchführung des Verfahrens nach einem der Ansprüche 1 bis 5, **dadurch gekennzeichnet, dass** sie ein Gemisch umfassen, welches, bezogen auf das Gewicht, folgendes enthält:
- 65 % trockene Granulate (5) aus Steingut mit einer Körnungsgröße zwischen zwei und vier Millimetern,
- 33 % epoxidhaltiges Kunstharz (7) einschließlich seines Härters (10), und
- 2 % eines plastifizierenden und verflüssigenden Bindemittels (8).

7. Mittel nach Anspruch 6, **dadurch gekennzeichnet, dass** das Bindemittel ein modifiziertes Lignosulfat ist.

8. Mittel nach Anspruch 6, **dadurch gekennzeichnet, dass** das Epoxidharz (7) ein Reaktionsprodukt von Bisphenol-A-Epichlorhydrin mit einem Molekulargewicht von weniger als oder gleich 700 ist, welches Hexandiol-Diglycidylether und ein Di-Isopropylnaphthalen-Isomer enthält.

9. Mittel nach Anspruch 6, **dadurch gekennzeichnet, dass** die Haftgrundierung (9) sich aus einem Kunstharz und einem Härter zusammensetzt, welcher so gewählt ist, dass die Grundierung etwa acht Stunden lang viskos bleibt.

10. Industrieboden, **dadurch gekennzeichnet, dass** man ihn mit Hilfe des Verfahrens nach einem der Ansprüche 1 bis 5 erhält, und dass er die folgenden physikalischen Eigenschaften aufweist:
- das spezifische Gewicht der fugenlosen Bodenplatte liegt in der Größenordnung von 1,5 kg/dm³,
- das Haftvermögen liegt in der Größenordnung von 80 kg/cm², die Reißfestigkeit liegt im Bereich von 150 kg/cm² und die Druckfestigkeit liegt in der Größenordnung von 450 kg/cm²,
- die Verdichtbarkeit bei 300 kg/cm² liegt in der Größenordnung von 3 %.
